# EUROPÄISCHE PATENTSCHRIFT

(11) **EP 2 257 840 B1**
(45) Veröffentlichungstag und Bekanntmachung des Hinweises auf die Patenterteilung: **06.02.2019**
(21) Anmeldenummer: 09722314.3
(22) Anmeldetag: 06.03.2009
(51) Int. Cl.: G01V 8/20

(54) **OPTISCHER SENSOR UND VERFAHREN ZUM NACHWEIS VON OBJEKTEN**
OPTICAL SENSOR AND METHOD FOR DETECTING OBJECTS
CAPTEUR OPTIQUE ET PROCÉDÉ DE DÉTECTION D'OBJETS

(30) Priorität: 20.03.2008 DE 202008003953 U
(43) Veröffentlichungstag der Anmeldung: 08.12.2010
(73) Patentinhaber: Pepperl + Fuchs GmbH, 68307 Mannheim (DE)
(72) Erfinder: THIEN, Marcus, Singapore 610333 (SG); CHIN, Kin Hing, Singapore 689097 (SG); CHONG, Yau Tine, Malaysia (MY); CHOW, Weng Cheong, Singapore 120427 (SG)
(74) Vertreter: Schiffer, Axel Martin
(86) Internationale Anmeldenummer: PCT/EP2009/001643
(87) Internationale Veröffentlichungsnummer: WO 2009/115202

(56) Entgegenhaltungen:
- DE-A1- 19 707 417
- DE-A1- 19 951 557
- DE-U1- 29 924 961
- DE-U1-202006 006 482

## Beschreibung

Die Erfindung betrifft einen optischen Sensor zum Nachweisen eines Objekts in einem Überwachungsbereich. Dieser optische Sensor weist eine Lichtsendeeinheit zum Einstrahlen von Licht in den Überwachungsbereich auf. Ferner gehört zu dem optischen Sensor eine Detektoreinheit, die ein Nahelement zum Nachweisen von reflektiertem und/oder gestreutem Licht von einem Objekt in einem Nahbereich und ein Fernelement zum Nachweisen von reflektiertem und/oder gestreutem Licht von einer Hintergrundfläche aufweist. Zum Ansteuern der Lichtsendeeinheit und zum Auswerten von Nachweissignalen der Detektoreinheit weist der optische Sensor zusätzlich eine Steuer- und Auswerteeinheit auf.

In einem weiteren Aspekt bezieht sich die Erfindung auf ein Verfahren zum Nachweis von Objekten nach dem Oberbegriff des Anspruchs 8.

Dabei wird mit einer Lichtsendeeinheit Licht in den Überwachungsbereich gestrahlt, mit einem Nahelement einer Detektoreinheit wird von einem Objekt in einem Nahbereich reflektiertes und/oder gestreutes Licht nachgewiesen, mit einem Fernelement der Detektoreinheit wird von einer Hintergrundfläche reflektiertes und/oder gestreutes Licht nachgewiesen und mit einer Steuer- und Auswerteeinheit wird die Lichtsendeeinheit angesteuert und Nachweissignale der Detektoreinheit werden ausgewertet.

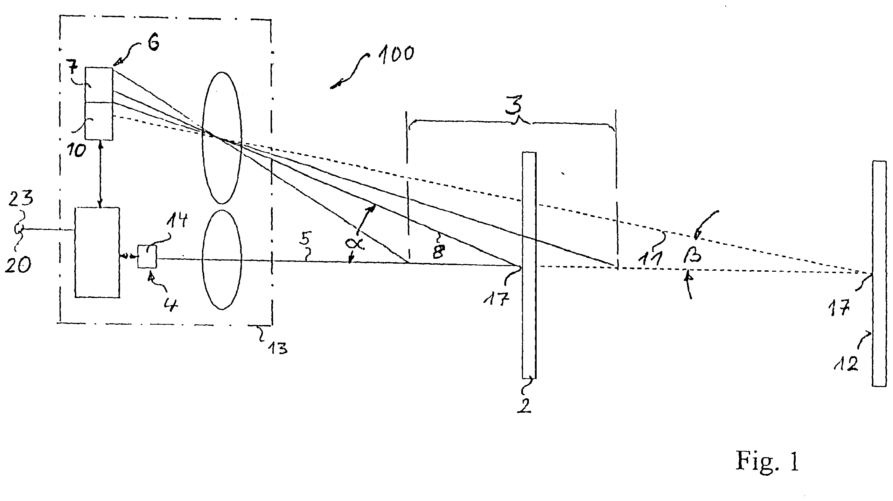

Das dem optischen Sensor zugrundeliegende Messverfahren wird mit Bezug auf Fig. 1 näher erläutert. Fig. 1 zeigt die Erfassung eines Objekts 2 in einem Nahbereich mittels eines Nahelements 7 einer Detektoreinheit 6. Die Detektoreinheit 6 weist neben dem Nahelement 7 ein örtlich dazu versetzt angeordnetes Fernelement 10 auf. Das Fernelement 10 kann ein von einer Hintergrundfläche 12 im Fernbereich reflektiertes und/oder gestreutes Licht auffangen. Dazu ist in dem optischen Sensor 1 eine Lichtquelle 14 einer Lichtsendeeinheit 4 angeordnet. Das Licht 5 der Lichtsendeeinheit kann von einem Objekt 2 im Überwachungsbereich 3 als reflektiertes und/oder gestreutes Licht 8 unter einem Winkel α von dem Nahelement 7 in der Detektoreinheit 6 erfasst werden.

Wenn kein Gegenstand bzw. kein Objekt 2 im Lichtstrahl 5 der Lichtquelle 14 vorhanden ist, so wird der Lichtstrahl 5, wie es die gestrichelten Linien zeigen, an einer Hintergrundfläche 12 unter dem Winkel β als reflektiertes oder gestreutes Licht 11 von dem Fernelement 10, das örtlich versetzt zu dem Nahelement 7 in der Detektoreinheit 6 angeordnet ist, aufgenommen. Eine Steuer- und Auswerteeinheit 9 ist in dem optischen Sensor 1 zum Ansteuern der Lichtsendeeinheit 4 und zum Auswerten von Nachweissignalen der Detektoreinheit 6 angeordnet und kann ein Schaltsignal 23 ausgeben, sobald ein Objekt 2, wie es Fig. 1 zeigt, im Nahbereich angeordnet ist.

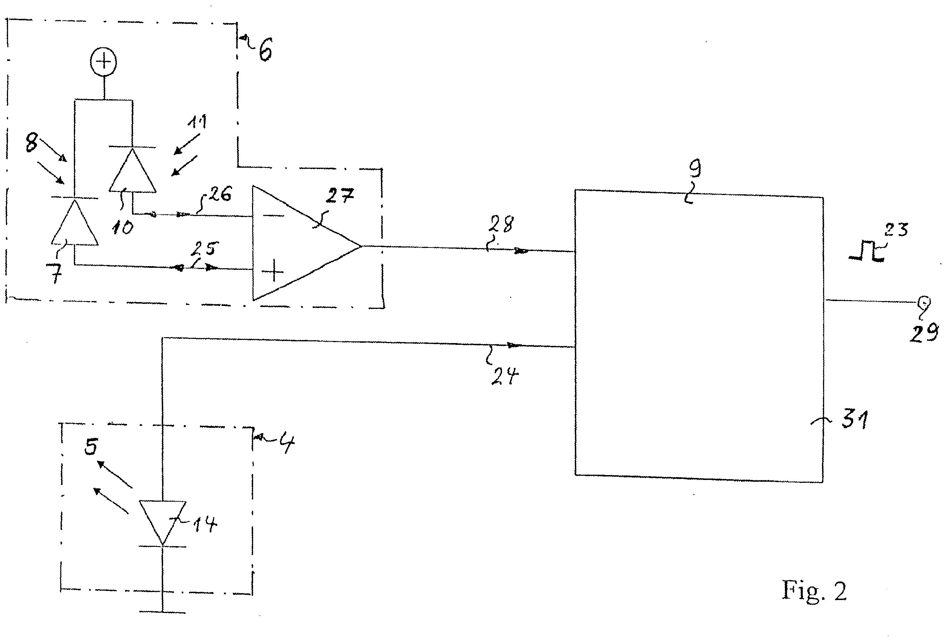

Eine prinzipielle Schaltung eines derartigen optischen Sensors zeigt Fig. 2 mit einer Leuchtdiode oder einem Laser als einzelne Lichtquelle 14, die von der Steuer- und Auswerteeinheit 9 über die Zuleitung 24 beispielsweise mit Stromimpulsen angesteuert und versorgt wird, so dass sie einen Lichtstrahl 5 abstrahlt. Detektordioden als Nahelement 7 und Fernelement 10 in der Detektoreinheit 6 liefern über Messleitungen 25 und 26 ihre Nachweissignale an einen Differenzverstärker 27. Der Differenzverstärker bildet ein positives Differenzsignal, wenn ein Objekt im Überwachungsbereich angeordnet ist. Wenn der Differenzverstärker ein negatives Signal bildet, ist kein Objekt im Überwachungsbereich angeordnet. Das verstärkte Differenzsignal der beiden Detektorelemente wird über die Zuleitung 28 der Steuer- und Auswerteeinheit 9 zugeführt. Die Steuer- und Auswerteeinheit 9 liefert an ihrem Ausgang 29 ein Schaltsignal 23, falls beispielsweise ein Objekt durch das Nahelement 7 detektiert wurde.

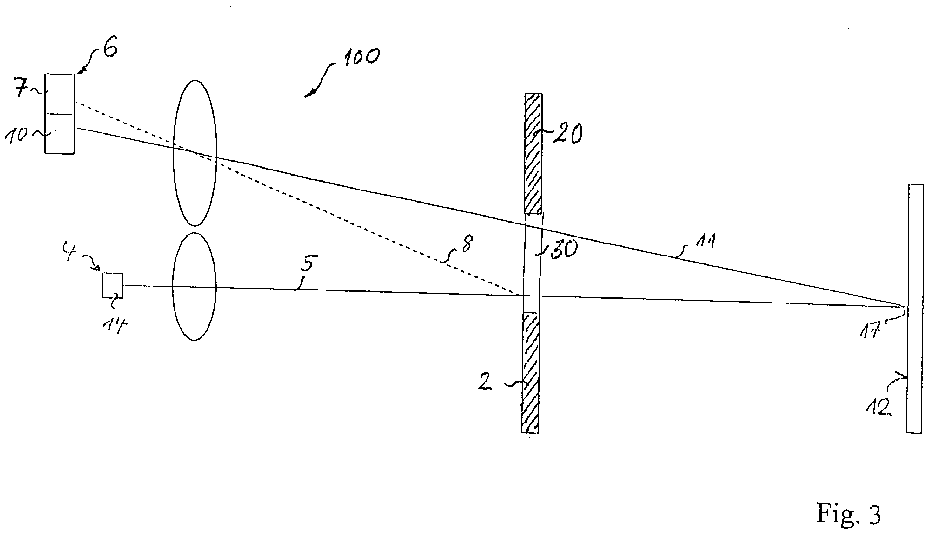

Die Nachteile und Grenzen eines derartigen Triangulationsverfahrens zeigt Fig. 3. Es können nämlich Fehlmessungen dann auftreten, wenn das Objekt 2, wie in Fig. 3 gezeigt, Lücken aufweist. Derartige Lücken werden häufig bei Leiterplatten beobachtet, bei denen Schlitze und Aussparungen beispielsweise für die spätere Montage in der Leiterplatte vorgesehen sind. Wenn der Lichtstrahl 5 der Lichtsendeeinheit 4 durch einen derartigen Schlitz 30 der Leiterplatte 20 fällt, gibt es eine Fehlanzeige, die zu einer Fehldiagnose bzw. Fehlinformation führen kann und entsprechend falsche Reaktionen auslösen kann. DE19951557 beschreibt eine optoelektronische Vorrichtung zum Erfassen von Objekten mit wenigstens einer Lichtsendeeinheit und einer Detektoreinheit.

Als eine Aufgabe der Erfindung kann angesehen werden, einen optischen Sensor zu schaffen, der Fehldiagnosen vermeidet und einen zuverlässigen Nachweis von Objekten in einem Überwachungsbereich liefert. Außerdem soll ein Verfahren zum Nachweisen eines Objekts in einem Überwachungsbereich angegeben werden, bei dem Fehldiagnosen zuverlässig vermieden werden können und ein zuverlässiger Nachweis von Objekten im Überwachungsbereich möglich ist.

Diese Aufgabe wird in einen ersten Aspekt mit dem Gegenstand des unabhängigen Anspruchs 1 gelöst. Vorteilhafte Weiterbildungen ergeben sich aus den abhängigen Ansprüchen und der folgenden Beschreibung. In verfahrensmäßiger Hinsicht wird die oben genannte Aufgabe durch das Verfahren mit den Merkmalen des Anspruchs 8 gelöst.

Erfindungsgemäß wird ein optischer Sensor zum Nachweisen eines Objekts in einem Überwachungsbereich geschaffen. Dieser optische Sensor weist eine Lichtsendeeinheit zum Einstrahlen von Licht in den Überwachungsbereich auf. Eine Detektoreinheit, die ein Nahelement zum Nachweis von reflektiertem und/oder gestreutem Licht eines Objekts in einem Nahbereich und ein Fernelement zum Nachweisen von reflektiertem und/oder gestreutem Licht einer Hintergrundfläche aufweist, ist in dem optischen Sensor angeordnet. Mit einer Steuer- und Auswerteeinheit kann die Lichtsendeeinheit angesteuert werden und ein Auswerten von Nachweissignalen der Detektoreinheit durchgeführt werden.

Zum Ausschließen von Fehldiagnosen weist die Lichtsendeeinheit erfindungsgemäß eine Mehrzahl von Lichtquellen auf. Die Lichtquellen sind so positioniert und ausgerichtet, um auf dem nachzuweisenden Objekt an unterschiedlichen Orten Lichtflecken zu erzeugen. Dazu weist die Strahlung der verschiedenen Lichtquellen jeweils verschiedene physikalische Eigenschaften auf, die eine Unterscheidung des auf die jeweiligen Lichtquellen zurückgehenden reflektierten und/oder gestreuten Lichts ermöglichen. Die Steuer- und Auswerteeinheit ist zum Ausgeben eines Schaltsignals auf Grundlage einer logischen Verknüpfung der auf die einzelnen Lichtquellen zurückgehenden Nachweissignale eingerichtet.

Ein derartiger optischer Sensor mit mehreren Lichtflecken-erzeugenden Lichtquellen in der Lichtsendeeinheit hat den Vorteil, dass durch eine geeignete logische Verknüpfung bzw. durch ein geeignetes logisches Verknüpfungselement wie ein ODER-Gatter das Licht eines der mehrerer Lichtquellen einen Bereich des nachzuweisenden Objekts treffen muss, um in der Steuer- und Auswerteschaltung ein entsprechendes Schaltsignal zur Kennzeichnung, dass ein Objekt im Nahbereich vorhanden ist, auszulösen. Das bedeutet, dass die Lichtstrahlen der übrigen Lichtquellen dieser Mehrzahl von Lichtquellen lediglich eine Reaktion des Fernelements anzeigen, was jedoch durch die logische ODER-Verknüpfung nicht zu einer Fehldiagnose führt.

Das Verfahren der oben genannten Art ist erfindungsgemäß dadurch weitergebildet, dass zum Ausschließen von Fehldiagnosen eine Mehrzahl von Lichtquellen verwendet wird, dass die Lichtquellen positioniert und ausgerichtet werden, um auf dem nachzuweisenden Objekt an unterschiedlichen Orten Lichtflecken zu erzeugen, dass die Strahlung der verschiedenen Lichtquellen jeweils verschiedene physikalische Eigenschaften aufweist, die eine Unterscheidung des auf die jeweiligen Lichtquellen zurückgehenden reflektierten und/oder gestreuten Lichts ermöglicht, und dass die Steuer- und Auswerteeinheit auf Grundlage einer logischen Verknüpfung der auf die einzelnen Lichtquellen zurückgehenden Nachweissignale ein Schaltsignal ausgibt.

In einer bevorzugten Ausführungsform der Erfindung kann die Detektoreinheit mit dem Nahelement Lichtflecken auf dem Objekt und mit dem Fernelement Lichtflecken auf der Hintergrundfläche nachweisen, wobei die Lichtsendeeinheit mindestens zwei Lichtquellen aufweist, die derart ausgerichtet sind, dass mindestens zwei reflektierende und/oder streuende Lichtflecken nebeneinander angeordnet sind. Das Anordnen der Lichtflecken nebeneinander hat den Vorteil, dass einzelne Öffnungen oder Schlitze in dem Objekt nicht zu einer Fehldiagnose führen können, da der Lichtfleck der ersten Lichtquelle einen anderen Bereich beleuchtet als der Lichtfleck der zweiten Lichtquelle. Die Sicherheit kann weiter erhöht werden, indem weitere Lichtquellen in dem optischen Sensor vorgesehen werden.

Um die oben erwähnte ODER-Verknüpfung zu gewährleisten, weist der optische Sensor in einer Alternative der Erfindung eine Steuer- und Auswerteeinheit mit einem Logikbaustein zum Nachweis eines vorhandenen Objekts in dem Überwachungsbereich auf. Mit dem Logikbaustein werden dann die Nachweissignale der Sensorelemente über die ODER-Verknüpfung ausgewertet.

Vorzugsweise weist der optische Sensor für die Lichtsendeeinheit, die Detektoreinheit und die Steuer- und Auswerteeinheit ein gemeinsames Gehäuse auf. Dieses Merkmal hat eine praktische Bedeutung und vereinfacht die Installation bzw. Anbringung des optischen Sensors in Fertigungsstraßen. Als Lichtquellen der Lichtsendeeinheit werden vorzugsweise Leuchtdioden oder Laserdioden eingesetzt. Diese Leuchtdioden oder La serdioden haben den Vorteil, dass sie energiesparend sind und zur optischen Bündelung mit preiswerten Fresnel-Folienlinsen ausgestattet sein können, um ein kostengünstiges Ausleuchten des Nah- bzw. Fernbereichs zu ermöglichen.

Die oben erwähnten verschiedenen physikalischen Eigenschaften der Lichtquellen können durch ein zeitversetztes Ansteuern der Lichtquellen realisiert werden. Dabei werden die nebeneinander liegenden Lichtflecken der Lichtquellen zeitversetzt ausgeleuchtet, so dass eine Positionszuordnung durch die Detektoreinheit aufgrund des Zeitunterschieds möglich ist. Dazu werden die Lichtquellen über Stromimpulse angesteuert, die ihrerseits entsprechend zeitversetzt von der Steuer- und Auswerteeinheit für die einzelnen Lichtquellen abgegeben werden.

Eine weitere Möglichkeit, verschiedene physikalische Eigenschaften der Lichtquellen zu nutzen, um die unterschiedlichen Positionen der Lichtflecken zu erfassen, besteht darin, den Lichtquellen unterschiedliche Lichtwellenlängen zuzuordnen, so dass ein farblicher Unterschied der nebeneinander angeordneten Lichtflecken auftritt. Damit wird es möglich, die Positionsanordnung der Lichtflecken durch die Detektoreinheit aufgrund des Farbunterschieds zu ermöglichen. Diese Identifizierung der Lichtquellen hat den Vorteil, dass die Lichtquellen im Dauerbetrieb betrieben werden können und auf eine Impulsgeneration verzichtet werden kann. Außerdem hat diese Lösung den Vorteil, dass Fehldiagnosen weiter verringert werden, zumal keine Lücken, d.h. Pulspausen vorgesehen sind. Voraussetzung hierfür ist, dass die Detektoreinheit das einkommende Licht zumindest in Teilbereichen wellenlängenspezifisch nachweist.

Eine weitere bevorzugte Möglichkeit besteht darin, als verschiedene physikalische Eigenschaften der Lichtquelle unterschiedliche Modulationsfrequenzen bei der Erzeugung der nebeneinander angeordneten Lichtflecken einzusetzen. Dabei wird eine Positionszuordnung durch die Detektoreinheit aufgrund der Unterschiede in den Modulationsfrequenzen ermöglicht.

Um die oben aufgestellten Forderungen an den optischen Sensor zu erfüllen, weist die Steuer- und Auswerteeinheit einen Mikrocontroller auf, der die Lichtquellen mit zeitlich versetzten oder mit modulierten Impulsen versorgt und aus einem verstärkten Differenzsignal der mindestens zwei Sensorelemente ein Nachweissignal zum Nachweis eines Objekts in dem Überwachungsbereich bereitstellt. Derartige Mikrocontroller arbeiten schnell und zuverlässig und sorgen dafür, dass Fehldiagnosen vermieden werden.

Der optische Sensor kann nicht nur für die oben erwähnten gedruckten Schaltungsplatinen und vorzugsweise für Leiterplatten vor einer Hintergrundfläche in einem Überwachungsbereich eingesetzt werden, sondern es ist mit diesem Detektor auch möglich, die Befüllung einer zu prüfenden Verpackung auf Vollständigkeit zu untersuchen. Dabei werden beispielsweise transparente Blister-Packungen mit Kleinteilen wie Tabletten, Pillen und/oder Kapseln vor der Hintergrundfläche in dem Überwachungsbereich überprüft. Fehlt ein derartiges Kleinteil, so erfolgt eine Reflektion bzw. eine Streuung des Lichts nicht aus dem Nahbereich, sondern für die Position des fehlenden Kleinteils aus dem Fernbereich, zumal die Verpackung transparent ist. Grundsätzlich kann der erfindungsgemäße optische Sensor aber auch so präzise eingestellt werden, dass ein Signal von einer Blisteroberfläche als Vordergrundsignal und ein Signal von den Zwischenbereichen der Blister oder jedenfalls von einem Bereich, der mit diesen Zwischenbereichen auf derselben Höhe liegt, als Hintergrundsignal nachgewiesen wird. Wenn demnach ein Blisterabteil nicht gefüllt und demgemäß nicht über die Zwischenbereiche erhaben ist oder vorsteht, kann dies als Hintergrundsignal erkannt und nachgewiesen werden. In diesem Sinn kann mit dem erfindungsgemäßen optischen Sensor auch die Befüllung von Blisterpackungen überprüft werden, die nicht transparent sind.

Alternativ oder ergänzend ist bei dem erfindungsgemäßen Sensor in der Steuer- und Auswerteeinheit ein Logikbaustein für eine logische UND-Verknüpfung von mindestens zwei Nachweissignalen der Sensorelemente vorgesehen. Neben der Überwachung des Vorhandenseins beziehungsweise Nichtvorhandenseins von Gegenständen im Überwachungsbereich beziehungsweise Kleinteilen in einer entsprechenden transparenten Verpackung im Nahbereich kann dieser optische Sensor auch für das Zählen von Objekten eingesetzt werden, indem in der Steuer- und Auswerteeinheit eine Zählvorrichtung vorgesehen ist.

In einer weiteren Variante des Verfahrens wird bei dem optischen Sensor als Lichtsendeeinheit eine Vielzahl benachbart angeordneter Lichtquellen, insbesondere ein zweidimensionales Leuchtdioden-Array, verwendet, wobei die einzelnen Lichtquellen unabhängig voneinander ansteuerbar sind und somit der zu untersuchenden Objektgeometrie angepasst werden können. In einer bevorzugten Ausführungsvariante sind die Leuchtdioden als oberflächenmontierbare Bauteile (Surface-Mounted Devices, SMDs) gefertigt.

Eine weitere erfindungsgemäße Anwendung, die durch die Verwendung mindestens zweier Lichtquellen verschiedener Wellenlänge ermöglicht wird, ist der Nachweis farbiger Objekte, insbesondere bedruckter farbiger Bögen in der Drucktechnik. Ist bei den besagten Objekten an der von einem Lichtfleck beleuchteten Stelle die Reflexion für eine der verwendeten Lichtwellenlängen nicht ausreichend intensiv (zum Beispiel für grünes Licht auf einem rot bedruckten Bogen), kann durch eine zweite Lichtquelle mit anderer Wellenlänge das fragliche Objekt detektiert werden.

Schließlich ist es auch möglich, einen Zeitaufnehmer für den optischen Sensor vorzusehen, der einen Geschwindigkeitsnachweis des Objekts in dem Überwachungsbereich ermöglicht, wenn der Gegenstand den von mindestens zwei Lichtflecken überwachten Überwachungsbereich passiert. Somit ergeben sich für den erfindungsgemäßen optischen Sensor eine Vielzahl von vorteilhaften Anwendungen, die darauf beruhen, dass mehrere Lichtquellen so ausgerichtet sind, dass örtlich voneinander getrennte Lichtflekken in dem Überwachungsbereich erzeugt werden.

Die Erfindung wird nun anhand der beigefügten Figuren näher erläutert.
- Fig. 1: zeigt eine Prinzipskizze eines optischen Sensors auf der Grundlage einer Triangulationsmessung;
- Fig. 2: zeigt ein schematisches Schaltbild einer Vorrichtung gemäß Fig. 1;
- Fig. 3: zeigt eine Prinzipskizze einer möglichen Fehldiagnose eines optischen Sensors gemäß Fig. 1;
- Fig. 4: zeigt eine Prinzipskizze eines optischen Sensors gemäß einer Ausführungsform der Erfindung vor dem Einführen eines Objekts in den Überwachungsbereich;
- Fig. 5: zeigt eine Prinzipskizze des optischen Sensors gemäß Fig. 4 nach Einführen eines Objekts in den Überwachungsbereich;
- Fig. 6: zeigt ein schematisches Schaltbild einer Vorrichtung gemäß Fig. 4;
- Fig. 7: zeigt eine Auswertetabelle einer Steuer- und Überwachungseinheit eines optischen Sensors gemäß einer Ausführungsform der Erfindung;
- Fig. 8: zeigt eine Prinzipskizze eines optischen Sensors gemäß einer zweiten Ausführungsform der Erfindung;
- Fig. 9: zeigt eine Prinzipskizze eines optischen Sensors gemäß einer dritten Ausführungsform der Erfindung;
- Fig. 10: zeigt eine Prinzipskizze eines optischen Sensors gemäß einer vierten Ausführungsform der Erfindung;
- Fig. 11: zeigt schematische Diagramme von zeitabhängigen Nachweissignalen des optischen Sensors gemäß Fig. 10; und
- Fig. 12: zeigt eine Prinzipskizze eines erfindungsgemäßen optischen Sensors gemäß einer fünften Ausführungsform.

Fig. 1 zeigt eine Prinzipskizze eines optischen Sensors 100 auf der Grundlage einer Triangulationsmessung gemäß dem Stand der Technik. Die Nachteile eines derartigen optischen Sensors 100 sind einleitend bereits dargestellt. Fig. 2 zeigt dazu ein schematisches Schaltbild der Vorrichtung gemäß Fig. 1, und Fig. 3 verdeutlicht eine Situation für eine mögliche Fehldiagnose eines optischen Sensors 100 aus dem Stand der Technik. Zur Vermeidung von Wiederholungen werden die Figuren 1 bis 3 nicht erneut erörtert.

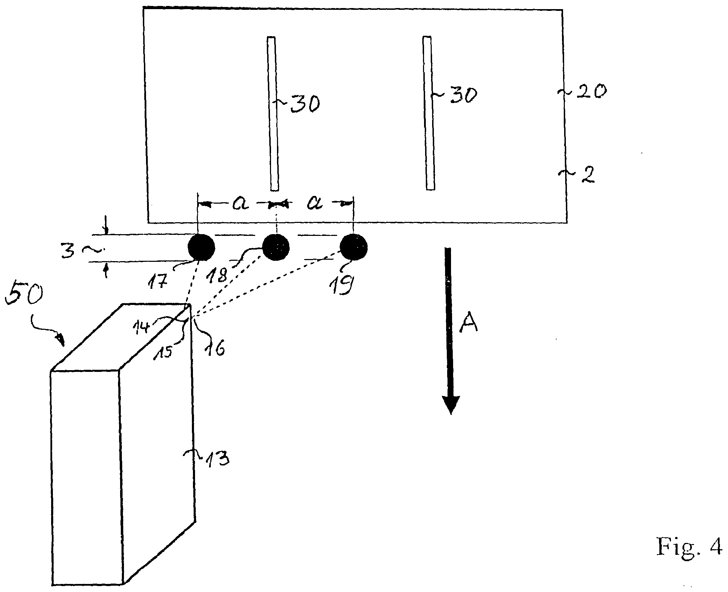

Fig. 4 zeigt eine Prinzipskizze eines optischen Sensors 50 gemäß einer Ausführungsform der Erfindung, wobei sich ein nachzuweisendes Objekt 2 in einer Position vor dem Einführen des Objekts 2 in einen Überwachungsbereich 3 des optischen Sensors 50 befindet. Das zu überwachende Objekt 2 ist in dieser Ausführungsform der Erfindung eine Leiterplatte 20, die zwei Schlitze 30 aufweist, durch welche eine Hintergrundfläche für den optischen Sensor sichtbar wird, wenn die Leiterplatte 20 in Pfeilrichtung A aus der in Fig. 4 gezeigten Position in eine Position im Überwachungsbereich 3 transportiert wird.

Üblicherweise werden derartige optische Sensoren 50 in Überwachungsstationen von Fertigungsstraßen eingesetzt, so dass die Pfeilrichtung A die Transportrichtung der Fertigungsstraße darstellt. Der optische Sensor 50 unterscheidet sich in dieser Ausführungsform der Erfindung von Fig. 1 dadurch, dass er nicht einen einzelnen Lichtfleck 17 zum Nachweis eines Objekts 2 in einem Überwachungsbereich 3 aufweist. Vielmehr sind in dieser Ausführungsform der Erfindung drei Lichtflecken 17, 18 und 19 nebeneinander angeordnet, die von drei Lichtquellen 14, 15 und 16 des optischen Sensors 50 erzeugt werden. Die Lichtflecken 17, 18 und 19 weisen einen Abstand a auf und überragen nicht die nachzuweisende Fläche der Platine 20.

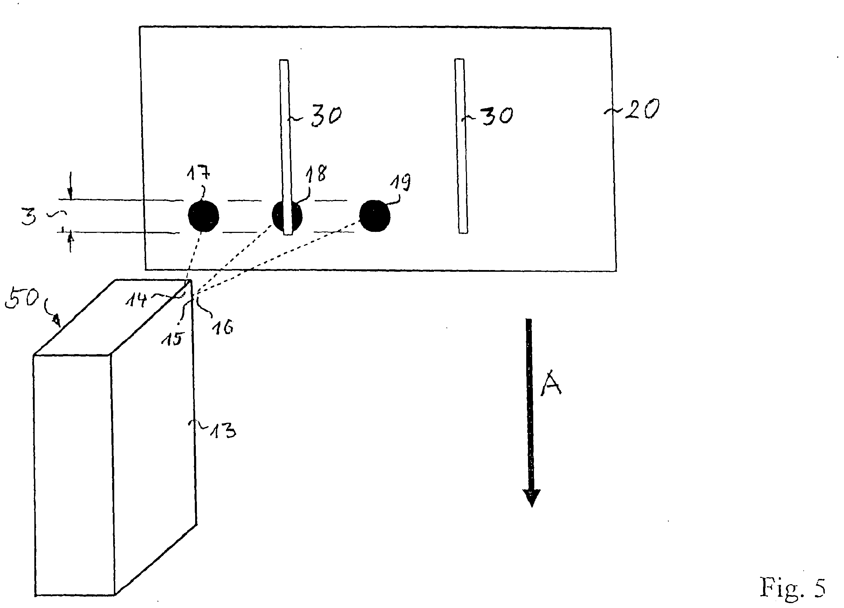

Fig. 5 zeigt eine Prinzipskizze des optischen Sensors 50 gemäß Fig. 4 nach Einführen eines Objekts 2 in den Überwachungsbereich 3, nachdem die Leiterplatine 20 in Pfeilrichtung A transportiert ist. Durch das nebeneinander Anordnen von drei Lichtquellen 14, 15 und 16 zur Erzeugung von Lichtflecken 17, 18 und 19 in einem Fernbereich und/oder einem Nahbereich wird sichergestellt, dass beispielsweise der Lichtfleck 18, der hier einen Schlitz 30 und damit den Hintergrund der Leiterplatte 20 beleuchtet, nicht zu einer Fehldiagnose führt, zumal der optische Sensor 50 ein Logikelement aufweist, das eine logische ODER-Verknüpfung ermöglicht, und somit in jedem Fall die Leiterplatte im Überwachungsbereich 3 des optischen Sensors 50 durch einen der drei Lichtstrahlen nachgewiesen wird.

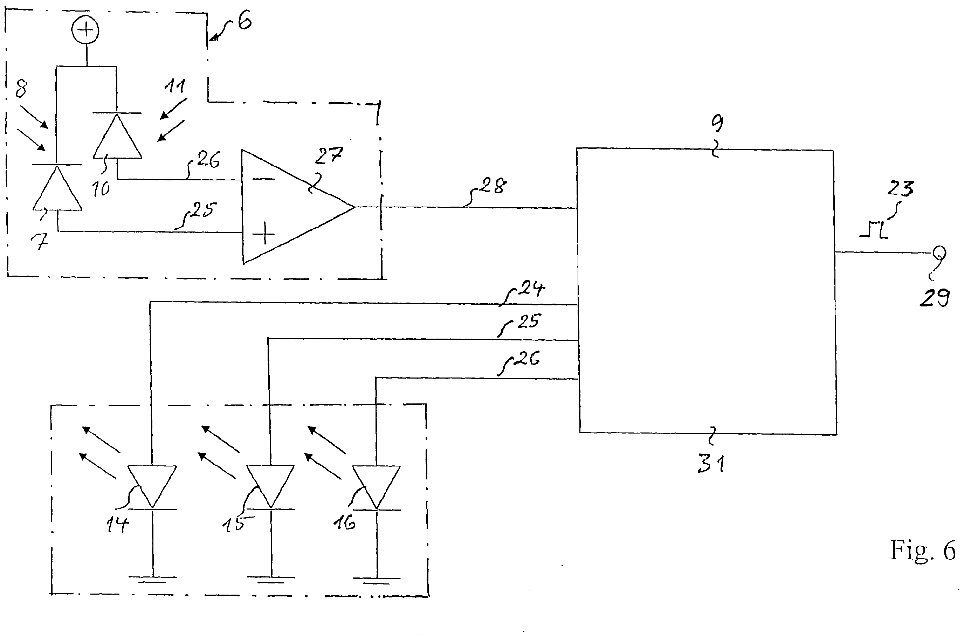

Fig. 6 zeigt ein schematisches Schaltbild einer Vorrichtung gemäß Fig. 4, wobei Komponenten mit gleichen Funktionen wie in Fig. 2 des Standes der Technik mit gleichen Bezugszeichen gekennzeichnet und nicht erneut erörtert werden. Der Unterschied der vorliegenden Erfindung zu dem in Fig. 2 gezeigten Schaltbild besteht nun darin, dass von der Steuer- und Auswerteeinheit 9 mit ihrem Mikrocontroller 31 zeitversetzt Stromimpulse über die Zuleitungen 24, 35 und 46 den Lichtquellen 14, 15 und 16 in Form von Leuchtdioden oder Laserdioden zuführt werden.

Durch das zeitversetzte Aufleuchten der durch die Lichtquellen 14, 15 und 16 erzeugten Lichtflecke wird eine zeitversetzte Detektion von Messsignalen durch den Detektor 6 erfasst und über den Differenzverstärker 27 der Steuer- und Auswerteeinheit 9 bzw. dem Mikrocontroller 31 zugeführt, der die verstärkten Messsignale den Messflecken zuordnet und die Messung dahingehend auswertet, ob ein Objekt in dem Strahlengang einer der drei Lichtquellen 14, 15 oder 16 vorhanden war. Dazu weist der Mikrocontroller 31 einen Logikbaustein auf, der eine ODER-Verknüpfung der über die Zuleitung 28 empfangenen verstärkten Messsignale durchführt.

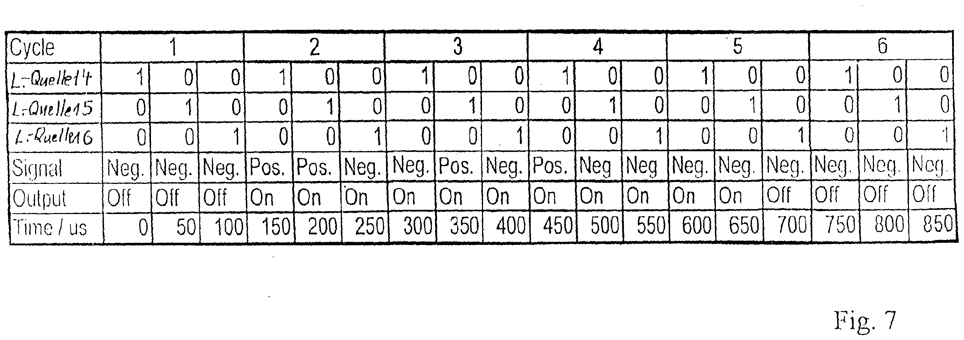

Fig. 7 zeigt eine Auswertetabelle einer Steuer- und Überwachungseinheit eines optischen Sensors gemäß einer Ausführungsform der Erfindung. Dazu sind in der Tabelle sechs Messzyklen aufgeführt, wobei mit dem ersten Messzyklus das nachzuweisende Objekt noch nicht im Erfassungsbereich des optischen Sensors liegt, und somit alle drei Messsignale negativ ausfallen, und deshalb wie in Fig. 6 gezeigt, ein "Off"-Signal am Ausgang 29 ansteht.

Im zweiten Zyklus beleuchtet die Lichtquelle 16 einen Spalt beispielsweise im Objekt bzw. in der Platine, während die Lichtquellen 14 und 15 ein positives Messsignal liefern, weil dort keine Öffnung zum Hintergrund auftaucht, so dass insgesamt der Ausgang auf "On" geschaltet wird. Wird in der Position der mittleren Lichtquelle 15 ein Schlitz festgestellt, so gibt es zwar ein negatives Messsignal, jedoch aufgrund der positiven Messsignale der Lichtquellen 14 und 16 bleibt ein "On" am Ausgang erhalten.

Verschiebt sich der Schlitz, durch den die Hintergrundfläche sichtbar wird, zu der ersten Lichtquelle 14, so bleibt dennoch am Ausgang 29 des Mikrocontrollers ein Schaltsignal "On" erhalten. Im fünften Zyklus leuchten alle drei Lichtquellen auf den Hintergrund, beispielsweise weil eine sehr große oder breite Öffnung im nachzuweisenden Objekt vorhanden ist. Dennoch bleibt am Ausgang 29 des Mikrocontrollers bis kurz nach Anschalten der Lichtquelle 16 im fünften Zyklus ein "On"-Schaltsignal erhalten. Erst wenn die Platine vollständig den Erfassungsbereich verlassen hat, steht am Ausgang 29 des Mikrocontrollers 31 ein "Off"-Signal an.

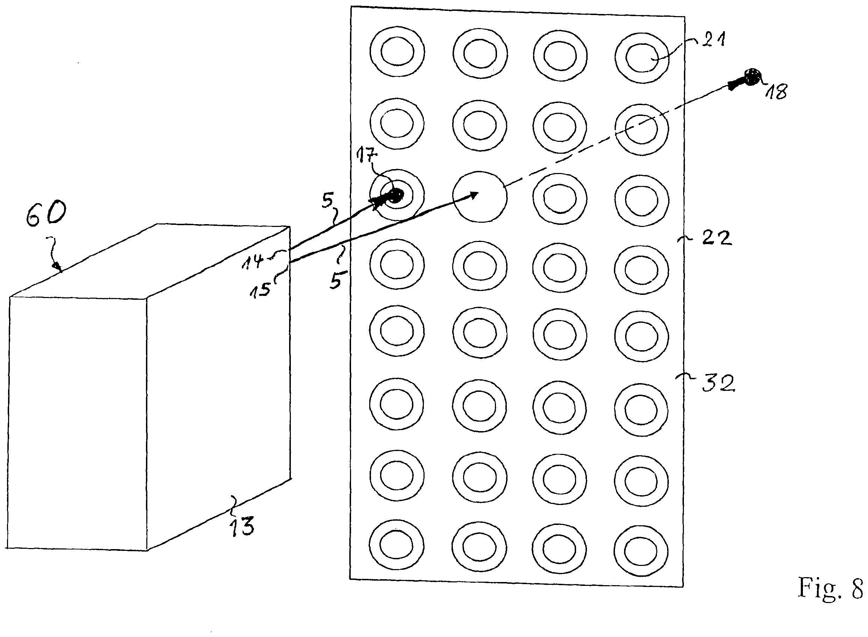

Fig. 8 zeigt eine Prinzipskizze eines optischen Sensors 60 gemäß einer zweiten Ausführungsform der Erfindung. Dieser optische Sensor 60 arbeitet nach dem gleichen Prinzip wie der optische Sensor 50 des ersten Ausführungsbeispiels. Hier jedoch sind zwei Lichtquellen 14 und 15 vorgesehen, die derart ausgerichtet sind, dass ihre Lichtflecken 17 bzw. 18 einzelne Positionen von in einer Blister-Packung 22 verpackten Kleinteilen 21 zwischen transparenten Folien beleuchten. Wie Fig. 8 zeigt, kann mit dem optischen Sensor 60 die Vollständigkeit der Verpackung der Blister-Packung 22 mit Kleinteilen 21 überprüft werden, wenn die Lichtstrahlen 5 der Lichtquelle 14 und 15 derart ausgerichtet sind, dass sie die benachbarten Positionen von Kleinteilen in der Blister-Packung 22 ausleuchten. Durch eine logische UND-Verknüpfung der Messsignale innerhalb des Mikrocontrollers, der dazu ein UND-Gatter aufweist, kann die Verpakkung auf Vollständigkeit exakt geprüft werden.

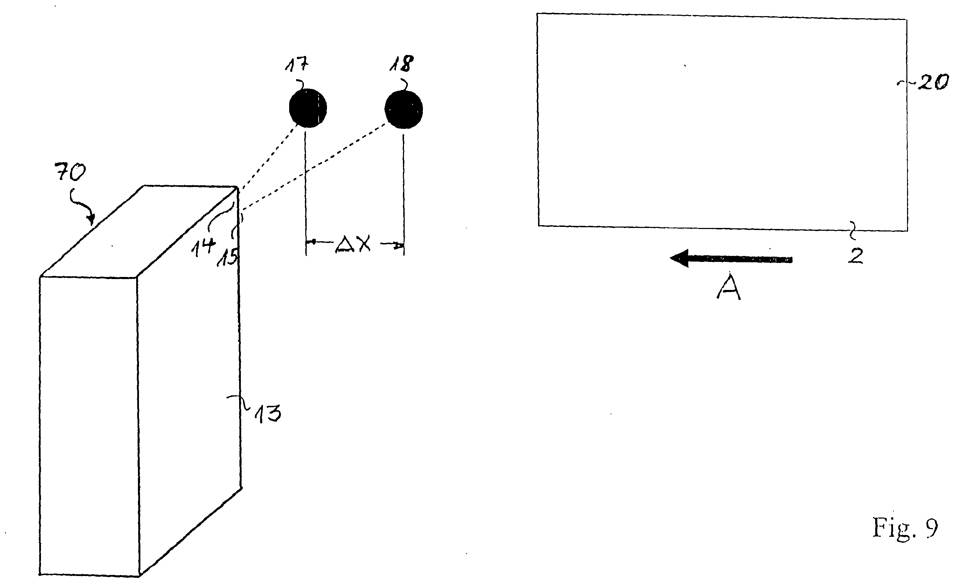

Fig. 9 zeigt eine Prinzipskizze eines optischen Sensors 70 gemäß einer dritten Ausführungsform der Erfindung. Auch hier sind zwei Lichtquellen 14 und 15 vorgesehen, wobei die Lichtflecken 17 und 18 in einem Abstand Δx angeordnet sind, und wobei beispielsweise eine Platine 20 als zu vermessendes Objekt 2 in Pfeilrichtung A nacheinander von den Lichtstrahlen der Lichtquellen 14 und 15 in einem messbaren Zeitintervall Δt erfasst werden. Mit Hilfe des Abstandes Δx und einer Zeiterfassung des Zeitintervalls Δt kann die Transportgeschwindigkeit v = Δx/Δt der Leiterplatte 20 in Pfeilrichtung A beispielsweise auf einem Fertigungsband festgestellt werden.

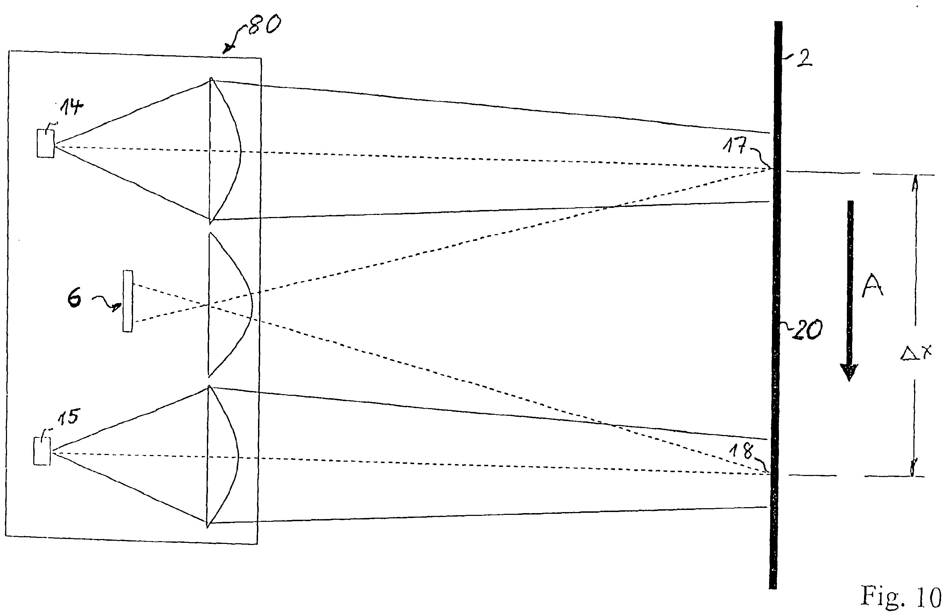

Fig. 10 zeigt eine Prinzipskizze eines optischen Sensors 80 gemäß einer vierten Ausführungsform der Erfindung. Bei dieser Anordnung des Sensors kann bereits innerhalb einer Leiterplatte 20 eine Transportgeschwindigkeit in Pfeilrichtung A nachgewiesen werden, indem charakteristische Reflexionsmuster im Lichtfleck 17 durch eine Detektoreinheit 6 aufgenommen werden und die Zeitdifferenz Δt, bis zu der das gleiche Muster im Lichtfleck 18 der zweiten Lichtquelle 15 auftaucht, festgestellt wird. So kann aus dem Quotienten Δx/Δt die Geschwindigkeit v = Δx/Δt der Leiterplatte 20 im Fertigungsablauf festgestellt werden. In der Detektoreinheit 6 sind hierbei das Nahelement und das Fernelement zusammengefasst.

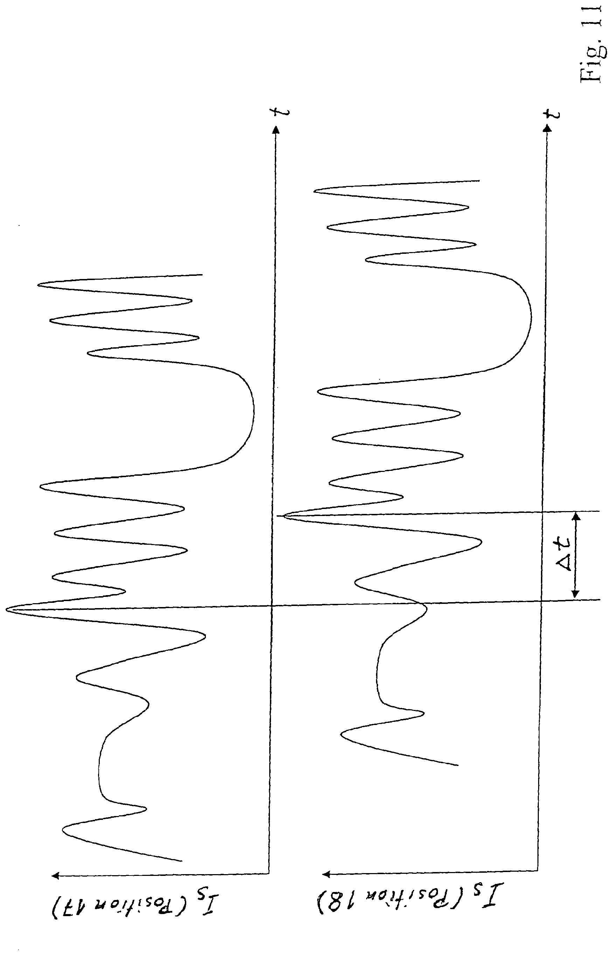

Fig. 11 zeigt schematische Diagramme von zeitabhängigen Nachweissignalen des optischen Sensors 80 gemäß Fig. 10. Dazu kann beispielsweise der Sensorstrom IS für den Lichtfleck 17 aufgenommen werden sowie der Sensorstrom IS in der Position 18 protokolliert werden, und bei gleichen Strommessspitzen aufgrund besonders gut reflektierender Strukturen auf dem zu vermessenden Objekt kann das Zeitintervall Δt zwischen dem Auftauchen des Musters im Messfleck 17 und dem Messfleck 18, wie es in Fig. 10 gezeigt wird, als bzw. einer Zeitdifferenz festgestellt werden. Wird der Abstand Δx der Lichtflecken 17 und 18 ins Verhältnis zu der gemessenen Zeit Δt gestellt, so ergibt sich die Geschwindigkeit v, mit der die Leiterplatte 20 aus Fig. 10 an den Lichtflekken 17 und 18 der Lichtquellen 14 und 15 vorbeigeführt wird.

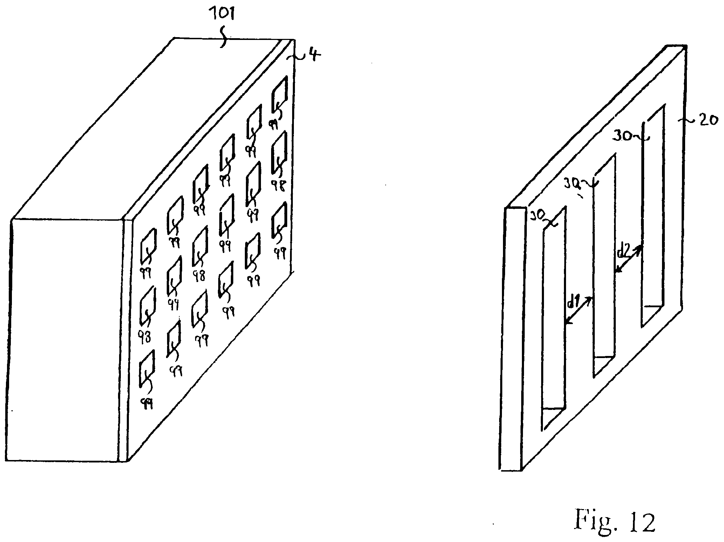

Fig. 12 zeigt eine Prinzipskizze eines erfindungsgemäßen optischen Sensors 101 gemäß einer fünften Ausführungsform der Erfindung, wobei die Lichtsendeeinheit 4 ein zweidimensionales Leuchtdioden-Array ist. Dessen einzelne Leuchtdioden sind unabhängig voneinander steuerbar. Beispielhaft sind eingeschaltete Leuchtdioden 98 und ausgeschaltete Leuchtdioden 99 dargestellt. Die Anzahl der Leuchtdioden im Array ist in diesem Beispiel zu 18 gewählt, muss aber nicht darauf beschränkt sein.

Das Licht der aktiven Leuchtdioden 98 trifft auf eine Leiterplatte 20, wobei gerade die für die entsprechende Anwendung geeigneten Leuchtdioden aktiviert werden. Im gezeigten Fall werden die Leuchtdioden 98 so gewählt, dass in keiner Situation alle drei Schlitze 30, die in den Abständen d1 und d2 zueinander angeordnet sind, gleichzeitig getroffen werden. Demgemäß fällt auf die Leiterplatte 20 immer mindestens ein Lichtfleck und die Leiterplatte 20 kann deshalb zuverlässig nachgewiesen werden.

## Patentansprüche

1. Optischer Sensor zum Nachweisen eines Objekts (2) in einem Überwachungsbereich (3), insbesondere zur Durchführung des Verfahrens nach einem der Ansprüche 16 bis 24,
mit einer Lichtsendeeinheit (4) zum Einstrahlen von Licht (5) in den Überwachungsbereich (3),
mit einer Detektoreinheit (6), die ein Nahelement (7) zum Nachweis von von einem Objekt (2) in einem Nahbereich reflektiertem und/oder gestreutem Licht (8) und ein Fernelement (10) zum Nachweisen von von einer Hintergrundfläche (12) reflektiertem und/oder gestreutem Licht (11) aufweist, und
mit einer Steuer- und Auswerteeinheit (9) zum Ansteuern der Lichtsendeeinheit (4) und zum Auswerten von Nachweissignalen der Detektoreinheit (6),
wobei die Lichtsendeeinheit (4) zum Ausschließen von Fehldiagnosen eine Mehrzahl von Lichtquellen (14, 15, 16) aufweist,
die Lichtquellen (14) positioniert und ausgerichtet sind, um auf dem nachzuweisenden Objekt (2) an unterschiedlichen Orten Lichtflecken (17, 18, 19) zu erzeugen,
die Strahlung der verschiedenen Lichtquellen (14, 15, 16) jeweils verschiedene physikalische Eigenschaften aufweist, die eine Unterscheidung des auf die jeweiligen Lichtquellen (14, 15, 16) zurückgehenden reflektierten und/oder gestreuten Lichts (5) ermöglicht, **dadurch gekennzeichnet,**
**dass** die Steuer- und Auswerteeinheit (9) zum Ausgeben eines Schaltsignals (23) auf Grundlage einer logischen Verknüpfung der auf die einzelnen Lichtquellen (14, 15, 16) zurückgehenden Nachweissignale eingerichtet ist, sowie dass die Steuer- und Auswerteeinheit (9) zum Nachweis eines vorhandenen Objekts (2) in dem Überwachungsbereich einen Logikbaustein für eine logisehe ODER-Verknüpfung der auf die verschiedenen Lichtquellen (14, 15) zurückgehenden Nachweissignale aufweist oder
**dass** die Steuer- und Auswerteeinheit (9) zum Nachweis eines fehlenden Kleinteils (21) in dem Überwachungsbereich (3) einen Logikbaustein für eine logische UND-Verknüpfung der mindestens zwei Nachweissignale der Sensorelemente (7, 10) aufweist.

2. Optischer Sensor nach Anspruch 1,
**dadurch gekennzeichnet,**
**dass** die Lichtquellen (14, 15, 16) zum Bereitstellen von verschiedenen physikalischen Eigenschaften zeitversetzt ansteuerbar und/oder unterschiedlich modulierbar sind.

3. Optischer Sensor nach einem der Ansprüche 1 oder 2,
**dadurch gekennzeichnet,**
**dass** die Lichtsendeeinheit (4) als Lichtquellen (14, 15, 16) Leuchtdioden und/oder Laserdioden aufweist.

4. Optischer Sensor nach einem der Ansprüche 1 bis 3,
**dadurch gekennzeichnet,**
**dass** die Detektoreinheit (6) mit dem Nahelement (7) Lichtflecken (17) auf dem Objekt (2) und mit dem Fernelement (10) Lichtflecken (17) auf der Hintergrundfläche (12) nachweist, und
**dass** die Lichtsendeeinheit (4) mindestens zwei Lichtquellen (14, 15) aufweist, die so ausgerichtet sind, dass mindestens zwei Lichtflecken (17, 18, 19) nebeneinander angeordnet sind oder
**dass** die Lichtsendeeinheit (4) mindestens drei Lichtquellen (14, 15) aufweist, die so ausgerichtet sind, dass mindestens drei Lichtflecken (17, 18, 19) nebeneinander angeordnet sind.

5. Optischer Sensor nach einem der Ansprüche 1 bis 4,
**dadurch gekennzeichnet,**
**dass** der optische Sensor (70, 80) zum Bestimmen einer Geschwindigkeit des Objekts (2) in dem Überwachungsbereich (3) einen Zeitaufnehmer aufweist.

6. Optischer Sensor nach einem der Ansprüche 1 bis 5,
**dadurch gekennzeichnet,**
**dass** die Lichtquellen (14, 15, 16) als verschiedene physikalische Eigenschaften unterschiedliche Lichtwellenlängen zur Erzeugung farblich unterschiedlicher Lichtflecken (17) aufweisen und
**dass** das Nahelement (7) und das Fernelement (10) wenigstens teilweise zum wellenlängenspezifischen Nachweisen des aus dem Nahbereich und/oder von der Hintergrundfläche (12) reflektierten und/oder gestreuten Lichts eingerichtet ist.

7. Optischer Sensor nach einem der Ansprüche 1 bis 6,
**dadurch gekennzeichnet,**
**dass** ein zweidimensionales Leuchtdioden-Array mit einer Vielzahl von Leuchtdioden (98, 99) vorhanden ist, die unabhängig voneinander ansteuerbar sind.

8. Verfahren zum Nachweisen von Objekten (2) in einem Überwachungsbereich (3), insbesondere unter Verwendung des optischen Sensors nach einem der Ansprüche 1 bis 7,
bei dem mit einer Lichtsendeeinheit (4) Licht (5) in den Überwachungsbereich (3) gestrahlt wird,
bei dem mit einem Nahelement (7) einer Detektoreinheit (6) von einem Objekt (2) in einem Nahbereich reflektiertes und/oder gestreutes Licht (8) nachgewiesen wird,
bei dem mit einem Fernelement (10) der Detektoreinheit (6) von einer Hintergrundfläche (12) reflektiertes und/oder gestreutes Licht (11) nachgewiesen wird und
bei dem mit einer Steuer- und Auswerteeinheit (9) die Lichtsendeeinheit (4) angesteuert wird und Nachweissignale der Detektoreinheit (6) ausgewertet werden,
wobei zum Ausschließen von Fehldiagnosen eine Mehrzahl von Lichtquellen (14, 15, 16) verwendet wird,
die Lichtquellen (14) positioniert und ausgerichtet werden, um auf dem nachzuweisenden Objekt (2) an unterschiedlichen Orten Lichtflecken (17, 18, 19) zu erzeugen,
die Strahlung der verschiedenen Lichtquellen (14, 15, 16) jeweils verschiedene physikalische Eigenschaften aufweist, die eine Unterscheidung des auf die jeweiligen Lichtquellen (14, 15, 16) zurückgehenden reflektierten und/oder gestreuten Lichts (5) ermöglicht, **dadurch gekennzeichnet, dass** die Steuer- und Auswerteeinheit (9) auf Grundlage einer logischen Verknüpfung der auf die einzelnen Lichtquellen (14, 15, 16) zurückgehenden Nachweissignale ein Schaltsignal (23) ausgibt,
wobei die Steuer- und Auswerteeinheit (9) zum Nachweis eines vorhandenen Objekts (2) in dem Überwachungsbereich eine logische ODER-Verknüpfung der auf die verschiedenen Lichtquellen (14, 15) zurückgehenden Nachweissignale durchführt oder die Steuer- und Auswerteeinheit (9) zum Nachweis eines fehlenden Kleinteils (21) in dem Überwachungsbereich (3) eine logische UND-Verknüpfung der mindestens zwei Nachweissignale der Sensorelemente (7, 10) durchführt.

9. Verfahren nach Anspruch 8,
**dadurch gekennzeichnet,**
**dass** die Lichtquellen (14, 15, 16) zum Bereitstellen von verschiedenen physikalischen Eigenschaften zeitversetzt angesteuert und/oder unterschiedlich moduliert werden.

10. Verfahren nach Anspruch 8 oder 9,
**dadurch gekennzeichnet,**
**dass** vor der Hintergrundfläche (12) in dem Überwachungsbereich (3) zeitweise angeordnete Leiterplatten (20) als Objekte (2) nachgewiesen werden.

11. Verfahren nach einem der Ansprüche 8 bis 10,
**dadurch gekennzeichnet,**
**dass** die nachzuweisenden Objekte (2) vor der Hintergrundfläche (12) in dem Überwachungsbereich (3) angeordnete, auf Vollständigkeit der Befüllung zu prüfende transparente Verpackungen, vorzugsweise Blister-Packungen (22) mit Kleinteilen (21), vorzugsweise mit Tabletten, Pillen und/oder Kapseln, sind.

12. Verfahren nach einem der Ansprüche 8 bis 11,
**dadurch gekennzeichnet,**
**dass** eine Geschwindigkeit des Objekts (2) in dem Überwachungsbereich (3) bestimmt wird.

13. Verfahren nach einem der Ansprüche 8 bis 12,
**dadurch gekennzeichnet,**
**dass** die Lichtquellen (14, 15, 16) als verschiedene physikalische Eigenschaften unterschiedliche Lichtwellenlängen zur Erzeugung farblich unterschiedlicher Lichtflecken (17) aufweisen und
**dass** mit dem Nahelement (7) und dem Fernelement (10) aus dem Nahbereich und/oder von der Hintergrundfläche (12) reflektiertes und/oder gestreutes Licht wellenlängenspezifisch nachgewiesen wird.

14. Verfahren nach einem der Ansprüche 8 bis 13,
**dadurch gekennzeichnet,**
**dass** eine Vielzahl von Lichtquellen, insbesondere ein zweidimensionales Leuchtdioden-Array, verwendet wird, wobei die einzelnen Lichtquellen unabhängig voneinander ansteuerbar sind.

15. Verfahren nach einem der Ansprüche 8 bis 14,
**dadurch gekennzeichnet,**
**dass** farbige Objekte, insbesondere bedruckte Bögen, durch Verwendung von mindestens zwei Lichtquellen mit unterschiedlichen Wellenlängen nachgewiesen werden.

## Claims

1. An optical sensor for the detection of an object (2) in a monitored region (3),
more particularly for the execution of the method as defined in any one of claims 8 to 15,
comprising a light emitting unit (4) for radiating light (5) into said monitored region (3),
a detector unit (6) comprising a close range element (7) for detecting the light (8) reflected and/or scattered by an object (2) in a near region and a far range element (10) for detecting light (11) reflected and/or scattered by a background surface (12), and
comprising a control/evaluation unit (9) for controlling said light emitting unit (4) and for evaluating detection signals produced by said detector unit (6), wherein
said light emitting unit (4) comprises a plurality of light sources (14, 15, 16) for obviating false diagnoses,
said light sources (14) are positioned and oriented so as to produce light spots (17, 18, 19) at different locations on the object to be detected (2),
the radiation of the different light sources (14, 15, 16) has in each case different physical properties making it possible to distinguish between the reflected and/or scattered light (5) derived from the respective light sources (14, 15, 16), **characterized in**
**that** the control/evaluation unit (9) is adapted to output a switching signal (23) on the basis of a logical operation on the detection signals derived from said individual light sources (14, 15, 16) and
**that** said control/evaluation unit (9) comprises a logic module for carrying out a logical OR operation on said detection signals derived from said different light sources (14, 15) for the purpose of confirming the presence of an object (2) in said monitored region or
**that** said control/evaluation unit (9) has a logic module for carrying out a logical AND operation on the at least two detection signals produced by said sensor elements (7, 10) for the purpose of confirming the absence of a small item (21) in the monitored region (3).

2. The optical sensor as defined in claim 1,
**characterized in that**
said light sources (14, 15, 16), for the purpose of providing different physical properties, are capable of being activated in a time-shifted manner and/or are capable of being differently modulated.

3. The optical sensor as defined in claim 1 or 2,
**characterized in that**
said light emitting unit (4) comprises, as light sources (14, 15, 16), light emitting diodes and/or laser diodes.

4. The optical sensor as defined in any one of claims 1 to 3,
**characterized in that**
that said detector unit (6) detects, by means of the close range element (7), light spots (17) on said object (2) and, by means of the far range element (10), light spots (17) on the background surface (12), and
that the light emitting unit (4) comprises at least two light sources (14, 15) that are oriented such that at least two light spots (17, 18, 19) are juxtaposed or that said light emitting unit (4) has at least three light sources (14, 15) oriented such that at least three light spots (17, 18, 19) are juxtaposed.

5. The optical sensor as defined in any one of claims 1 to 4,
**characterized in that**
said optical sensor (70, 80) has a timing device for the purpose of measuring the speed of the object (2) in the monitored region (3).

6. The optical sensor as defined in any one of claims 1 to 5,
**characterized in that**
said light sources (14, 15, 16) display different light wavelengths as different physical properties for creating light spots (17) of different colors, and
that the close range element (7) and the far range element (10) are adapted, at least partially, to detect wave length-specific properties of the light reflected and/or scattered in the near region and/or by the background surface (12).

7. The optical sensor as defined in any one of claims 1 to 6,
**characterized in that**
a two-dimensional array of light emitting diodes containing a large number of light emitting diodes (98, 99) is present which diodes are capable of being independently activated.

8. A method for detecting objects (2) in a monitored region (3), more particularly using the optical sensor as defined in any one of claims 1 to 7,
in which a light emitting unit (4) radiates light (5) into said monitored region (3), in which a close range element (7) of a detector unit (6) detects light (8) reflected and/or scattered by an object (2) in a near region,
in which a far range element (10) of said detector unit (6) detects light (11) reflected and/or scattered by a background surface (12), and
in which a control/evaluation unit (9) controls said light emitting unit (4) and evaluates detection signals produced by said detector unit (6),
wherein
a plurality of light sources (14, 15, 16) is used for obviating false diagnoses, said light sources (14) are positioned and oriented so as to create light spots (17, 18, 19) at different locations on said object to be detected (2),
the radiation emitted by the different light sources (14, 15, 16) has in each case different physical properties making it possible to distinguish between the reflected and/or scattered light (5) derived from said respective light sources (14, 15, 16),
**characterized in**
**that** said control/evaluation unit (9) outputs a switching signal (23) on the basis of a logical operation on said detection signals derived from said individual light sources (14, 15, 16), wherein
said control/evaluation unit (9) carries out a logical OR operation on the detection signals derived from said different light sources (14, 15) for the purpose of confirming that an object (2) is present in the monitored region or
said control/evaluation unit (9) carries out a logical AND operation on the at least two detection signals produced by said sensor elements (7, 10) for the purpose of confirming the absence of a small item (21) in the monitored region (3).

9. The method as defined in claim 8,
**characterized in that**
said light sources (14, 15, 16) are activated in a time-shifted manner and/or are are differently modulated for the purpose of providing different physical properties.

10. The method as defined in claim 8 or 9,
**characterized in that**
the objects (2) detected are printed circuit boards (20) that are temporarily disposed in front of said background surface (12) in the monitored region (3).

11. The method as defined in any one of claims 8 to 10,
**characterized in that**
the objects (2) to be detected are disposed in front of said background surface (12) in the monitored region (3) and consist of transparent packages to be checked for completeness of their contents, preferably blister packs (22) containing small items (21), preferably tablets, pellets, and/or capsules.

12. The method as defined in any one of claims 8 to 11,
**characterized in that**
a speed of said object (2) in said monitored region (3) is determined.

13. The method as defined in any one of claims 8 to 12,
**characterized in that**
said light sources (14, 15, 16) have, as different physical properties, different light wavelengths for the creation of light spots (17) having different colors and that said close range element (7) and said far range element (10) detect light reflected and/or scattered in the near region and/or by the background surface (12) according to its wavelength.

14. The method as defined in any one of claims 8 to 13,
**characterized in that**
use is made of a large number of light sources, more particularly a two-dimensional array of light emitting diodes, of which the individual light sources are capable of being independently activated.

15. The method as defined in any one of claims 8 to 14,
**characterized in that**
colored objects, particularly printed sheets, are detected by the use of at least two light sources having different wavelengths.

## Revendications

1. Capteur optique pour la détection d'un objet (2) dans une zone de surveillance (3), en particulier pour la réalisation du procédé selon l'une quelconque des revendications 16 à 24,
avec une unité d'émission de lumière (4) pour l'émission de lumière (5) dans la zone de surveillance (3),
avec une unité de détecteur (6) qui présente un élément proche (7) pour la détection de lumière (8) diffusée et/ou réfléchie par un objet (2) dans une zone proche et un élément éloigné (10) pour la détection de lumière (11) diffusée et/ou réfléchie par une surface d'arrière-plan (12), et
avec une unité de commande et d'évaluation (9) pour la commande de l'unité d'émission de lumière (4) et pour l'évaluation de signaux de détection de l'unité de détecteur (6),
dans lequel l'unité d'émission de lumière (4) présente pour l'exclusion de diagnostics erronés une pluralité de sources de lumière (14, 15, 16),
les sources de lumière (14) sont positionnées et orientées afin de générer sur l'objet (2) à détecter sur différents endroits des taches de lumière (17, 18, 19),
le rayonnement des différentes sources de lumière (14, 15, 16) présente respectivement différentes propriétés physiques qui permet une différenciation de la lumière (5) diffusée et/ou réfléchie provenant de sources de lumière (14, 15, 16) respectives, **caractérisé en ce**
**que** l'unité de commande et d'évaluation (9) est aménagée pour l'émission d'un signal de commutation (23) sur la base d'une combinaison logique des signaux de détection provenant de sources de lumière individuelles (14, 15, 16),
et **que** l'unité de commande et d'évaluation (9) présente pour la détection d'un objet (2) présent dans la zone de surveillance un module de logique pour une combinaison OU logique des signaux de détection provenant de différentes sources de lumière (14, 15) ou
**que** l'unité de commande et d'évaluation (9) présente pour la détection d'une petite pièce (21) manquante dans la zone de surveillance (3) un module de logique pour une combinaison ET logique des au moins deux signaux de détection des éléments de capteur (7, 10).

2. Capteur optique selon la revendication 1,
**caractérisé en ce**
**que** les sources de lumière (14, 15, 16) sont commandables et/ou modulables différemment en différé pour la mise à disposition de différentes propriétés physiques.

3. Capteur optique selon l'un quelconque des revendications 1 ou 2,
**caractérisé en ce**
**que** l'unité d'émission de lumière (4) présente en tant que sources de lumière (14, 15, 16) des diodes luminescentes et/ou diodes laser.

4. Capteur optique selon l'une quelconque des revendications 1 à 3,
**caractérisé en ce**
**que** l'unité de détecteur (6) détecte avec l'élément proche (7) des taches de lumière (17) sur l'objet (2) et avec l'élément éloigné (10) des taches de lumière (17) sur la surface d'arrière-plan (12), et
**que** l'unité d'émission de lumière (4) présente au moins deux sources de lumière (14, 15) qui sont orientées de sorte qu'au moins deux taches de lumière (17, 18, 19) soient agencées l'une à côté de l'autre ou
**que** l'unité d'émission de lumière (4) présente au moins trois sources de lumière (14, 15) qui sont orientées de sorte qu'au moins trois taches de lumière (17, 18, 19) soient agencées les unes à côté des autres.

5. Capteur optique selon l'une quelconque des revendications 1 à 4,
**caractérisé en ce**
**que** le capteur optique (70, 80) présente un chronomètre pour la détermination d'une vitesse de l'objet (2) dans la zone de surveillance (3).

6. Capteur optique selon l'une quelconque des revendications 1 à 5,
**caractérisé en ce**
**que** les sources de lumière (14, 15, 16) présentent en tant que différentes propriétés physiques différentes longueurs d'onde de lumière pour la génération de taches de lumière (17) de différente couleur et
**que** l'élément proche (7) et l'élément éloigné (10) sont aménagés au moins partiellement pour la détection spécifique à la longueur d'onde de la lumière diffusée et/ou réfléchie de la zone proche et/ou de la surface d'arrière-plan (12).

7. Capteur optique selon l'une quelconque des revendications 1 à 6,
**caractérisé en ce**
**qu'**un agencement à deux dimensions de diodes luminescentes est présent avec une pluralité de diodes luminescentes (98, 99) qui sont commandables indépendamment l'une de l'autre.

8. Procédé de détection d'objets (2) dans une zone de surveillance (3), en particulier en utilisant le capteur optique selon l'une quelconque des revendications 1 à 7,
où avec une unité d'émission de lumière (4) de la lumière (5) est irradiée dans la zone de surveillance (3),
où de la lumière (8) diffusée et/ou réfléchie d'un objet (2) dans une zone proche est détectée avec un élément proche (7) d'une unité de détecteur (6),
où de la lumière (11) diffusée et/ou réfléchie d'une surface d'arrière-plan (12) est détectée avec un élément éloigné (10) de l'unité de détecteur (6) et
où avec une unité de commande et d'évaluation (9) l'unité d'émission de lumière (4) est commandée et des signaux de détection de l'unité de détecteur (6) sont évalués, dans lequel pour l'exclusion de diagnostics erronés une pluralité de sources de lumière (14, 15, 16) est utilisée,
les sources de lumière (14) sont positionnées et orientées afin de générer sur l'objet (2) à détecter sur différents endroits des taches de lumière (17, 18, 19),
le rayonnement des différentes sources de lumière (14, 15, 16) présente respectivement différentes propriétés physiques qui permet une différentiation de la lumière (5) diffusée et/ou réfléchie provenant de sources de lumière (14, 15, 16) respectives, **caractérisé en ce que** l'unité de commande et d'évaluation (9) émet un signal de commutation (23) sur la base d'une combinaison logique des signaux de détection provenant de sources de lumière (14, 15, 16) individuelles,
dans lequel l'unité de commande et d'évaluation (9) réalise pour la détection d'un objet présent (2) dans la zone de surveillance une combinaison OU logique des signaux de détection provenant de différentes sources de lumière (14, 15) ou
l'unité de commande et d'évaluation (9) réalise pour la détection d'une petite pièce manquante (21) dans la zone de surveillance (3) une combinaison ET logique des au moins deux signaux de détection des éléments de capteur (7, 10).

9. Procédé selon la revendication 8,
**caractérisé en ce**
**que** les sources de lumière (14, 15, 16) sont commandées et/ou modulées différemment en différé pour la mise à disposition de différentes propriétés physiques.

10. Procédé selon la revendication 8 ou 9,
**caractérisé en ce**
**que** des plaques conductrices (20) agencées temporairement avant la surface d'arrière-plan (12) dans la zone de surveillance (3) sont détectées en tant qu'objets (2).

11. Procédé selon l'une quelconque des revendications 8 à 10,
**caractérisé en ce**
**que** les objets (2) à détecter sont des emballages transparents agencés avant la surface d'arrière-plan (12) dans la zone de surveillance (3), à vérifier quant à l'intégralité du remplissage, de préférence des emballages sous blister (22) avec de petites pièces (21), de préférence avec des tablettes, pilules et/ou gélules.

12. Procédé selon l'une quelconque des revendications 8 à 11,
**caractérisé en ce**
**qu'**une vitesse de l'objet (2) est déterminée dans la zone de surveillance (3).

13. Procédé selon l'une quelconque des revendications 8 à 12,
**caractérisé en ce**
**que** les sources de lumière (14, 15, 16) présentent en tant que différentes propriétés physiques différentes longueurs d'onde de lumière pour la génération de taches de lumière (17) de différente couleur et
**qu'**avec l'élément proche (7) et l'élément éloigné (10) de la lumière diffusée et/ou réfléchie de la zone proche et/ou de la surface d'arrière-plan (12) est détectée de manière spécifique à la longueur d'onde.

14. Procédé selon l'une quelconque des revendications 8 à 13,
**caractérisé en ce**
**qu'**une pluralité de sources de lumière, en particulier un agencement de diodes luminescentes à deux dimensions est utilisé, dans lequel les sources de lumière individuelles sont commandables indépendamment les unes des autres.

15. Procédé selon l'une quelconque des revendications 8 à 14,
**caractérisé en ce**
**que** des objets colorés, en particulier des feuilles imprimées sont détectées par utilisation d'au moins deux sources de lumière avec différentes longueurs d'onde.
